(19) Europäisches Patentamt
European Patent Office
Office européen des brevets

(11) **EP 4 597 433 A1**

(12) **EUROPEAN PATENT APPLICATION**

(43) Date of publication:
**06.08.2025 Bulletin 2025/32**

(21) Application number: **25154655.2**

(22) Date of filing: **29.01.2025**

(51) International Patent Classification (IPC):
**G06T 15/08** (2011.01)   **G06T 17/00** (2006.01)

(52) Cooperative Patent Classification (CPC):
**G06T 17/00; G06T 15/08; G06T 15/20;
G06T 15/506**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.01.2024 JP 2024012026**

(71) Applicant: **CANON KABUSHIKI KAISHA
Tokyo 146-8501 (JP)**

(72) Inventor: **KANEKO, Chiaki
Ohta-ku, Tokyo, 146-8501 (JP)**

(74) Representative: **TBK
Bavariaring 4-6
80336 München (DE)**

(54) **INFORMATION PROCESSING APPARATUS, INFORMATION PROCESSING METHOD, AND PROGRAM**

(57) The information processing apparatus (200) performs based data of a plurality of captured images obtained by capturing an object existing in a predetermined image capturing space from a plurality of viewpoints, camera parameters corresponding to each of the plurality of viewpoints in a case where image capturing is performed, and information on a color relating to an outside-region object, which is the object existing outside a learning region set in a three-dimensional space corresponding to the predetermined image capturing space learning of spatial information, which is information relating to a color and volume density at each position inside the learning region and the learning of spatial information is performed based on a difference between a rendering color including an accumulated color obtained by accumulating the spatial information and a color relating to the outside-region object, and a color of the captured image (S604 to S606).

FIG.3

EP 4 597 433 A1

## Description

BACKGROUND

Field

The present disclosure relates to an image processing technique for generating an image corresponding to a representation in a case where a target object is viewed from an arbitrary viewpoint by using a plurality of images obtained by image capturing from many viewpoints.

Description of the Related Art

There is a technique to generate an image corresponding to a representation in a case where a target object is viewed from an arbitrary viewpoint based on a plurality of captured images (in the following, called "multi-viewpoint images") obtained by image capturing from a plurality of viewpoints whose camera parameters are known. In the following, explanation is given by describing an arbitrary viewpoint as "virtual viewpoint" and an image corresponding to a representation in a case where a target object is viewed from a virtual point as "virtual viewpoint image". US Patent No. 11308659 (in the following, called "Patent Document 1") has disclosed a technique to generate a virtual viewpoint image corresponding to an appearance in a case where a target object is viewed from a virtual viewpoint by estimating radiance fields relating to the target object using multi-viewpoint images and by using the estimated radiance fields.

Specifically, with the technique disclosed in Patent Document 1, learning of a neural network (in the following, described as "NeRF") is performed, which returns the color and volume density of an object to the position and direction in a three-dimensional space by deep learning taking the pixel value of a captured image as training data. Further, by weighting and accumulating the value of the color that is output from the NeRF along the ray with the volume density, which is determined based on the position of the pixel of the virtual viewpoint image and the position of the virtual viewpoint and the viewing direction at the virtual viewpoint, the pixel value of the virtual viewpoint image is calculated. In the following, explanation is given by describing information including information indicating the position of a virtual viewpoint and information indicating the viewing direction at the virtual viewpoint as virtual camera parameters.

Pixel value calculation processing is generally called volume rendering. In the learning of NeRF, a virtual viewpoint image whose virtual viewpoint is taken as the same viewpoint of the viewpoint at which the captured image is captured is generated by volume rendering and a difference between the pixel value of the generated virtual viewpoint image and the pixel value of the captured image is used as a loss function. The NeRF originally learns the entire three-dimensional space of an image capturing target from a plurality of viewpoints en bloc and learns not only the main object but also its background and other objects included. The wider the learning-target three-dimensional space (in the following, called "learning region"), the more the accuracy of the virtual viewpoint image that is generated by the NeRF is reduced in a case where the number of parameters of the neural network and the number rays with which the space is sampled are taken to be constant. On the other hand, the larger the number of parameters or the number of rays, the more the cost, such as the processing time or the memory capacity, necessary for the learning of the NeRF increases. Consequently, it is desirable to limit the learning region to a space including an object desired to be reproduced as a representation on the virtual viewpoint image as narrow as possible.

SUMMARY

In a case where the learning region is limited to a narrow space, the background and other objects are no longer included in the learning region, and therefore, the color and volume density of the background and other objects no longer exist inside the learning region. As a result of that, there arises a case where the necessary color or volume density does not exist on the ray corresponding to the pixel of the virtual viewpoint image inside the learning region. In contrast to this, in the captured image, the representations of the background or other objects are included, which are not included in the learning region, and the pixel of the captured image has a certain color without fail. As described above, in the information corresponding to the learning-target three-dimensional space, information indicating a color does not exist in some cases, and therefore, there arises a gap between the information corresponding to the learning-target three-dimensional space and the information corresponding to the captured image having information on color without fail and it becomes difficult to estimate the radiance fields inside the learning region with accuracy.

The present disclosure discloses a technique capable of estimating the radiance fields inside a learning region with accuracy even in a case where the learning region is limited to a narrow space.

The present disclosure in its first aspect provides an information processing apparatus as specified in claims 1 to 10.

The present disclosure in its second aspect provides an information processing method as specified in claim 11.

The present disclosure in its third aspect provides programs as specified in claim 12.

Further features of various embodiments will become apparent from the following description of exemplary embodiments with reference to the attached drawings.

BRIEF DESCRIPTION OF THE DRAWINGS

FIG. 1A to FIG. 1C are each a diagram for explaining one example of a virtual viewpoint image that is generated by the conventional NeRF;

FIG. 2 is a block diagram showing one example of a hardware configuration of an information processing apparatus according to Embodiment 1;

FIG. 3 is a block diagram showing one example of a logical configuration of the information processing apparatus according to Embodiment 1;

FIG. 4A to FIG. 4D are each a diagram for explaining one example of a captured image that is obtained by a captured data obtaining unit according to Embodiment 1;

FIG. 5A to FIG. 5C are each a diagram showing one example of a background image that is obtained by a background data obtaining unit according to Embodiment 1;

FIG. 6 is a flowchart showing one example of a processing flow in the information processing apparatus according to Embodiment 1;

FIG. 7A and FIG. 7B are each a diagram showing one example of a GUI that is displayed and output by the information processing apparatus according to Embodiment 1;

FIG. 8 is a diagram showing one example of an object shape that is obtained by a shape obtaining unit according to Embodiment 1;

FIG. 9A and FIG. 9B are each a diagram showing one example of rays in generation processing of an outside-learning-region image according to Embodiment 1;

FIG. 10 is a flowchart showing one example of a flow of generation processing of an outside-learning-region image in an outside-region color data generation unit according to Embodiment 1;

FIG. 11A to FIG. 11C are each a diagram showing one example of an outside-learning-region image that is generated by the outside-region color data generation unit according to Embodiment 1;

FIG. 12A to FIG. 12F are each a diagram showing one example of a virtual viewpoint image that is generated by a learning unit according to Embodiment 1;

FIG. 13 is a flowchart showing one example of a flow of generation processing of an outside-learning-region image in an outside-region color data generation unit according to Embodiment 2;

FIG. 14 is a diagram showing one example of a positional relationship between imaging apparatuses and objects according to Embodiment 2;

FIG. 15 is a diagram showing one example of rays in generation processing of an outside-learning-region image according to Embodiment 2; and

FIG. 16A to FIG. 16D are each a diagram showing one example a captured image, a background image, an outside-learning-region image, and a virtual viewpoint image according to Embodiment 2.

DESCRIPTION OF THE EMBODIMENTS

Hereinafter, with reference to the attached drawings, the present disclosure is explained in detail in accordance with preferred embodiments. Configurations shown in the following embodiments are merely exemplary and the present disclosure is not limited to the configurations shown schematically.

[First Embodiment]

Before specific explanation of the embodiment, details of the problem the present disclosure tries to solve are explained. As described above, in a case where the learning region is limited to a narrow space and as result of that, the color or volume density does not exist at all on the ray corresponding to at least part of the pixel in the virtual viewpoint image, the color of the pixel obtained by accumulation along the ray in volume rendering will be transparent. In the following, explanation is given by describing the color that is obtained by accumulation along the ray as "accumulated color". Further, in a case where somewhat color or volume density exists on the ray, the accumulated color will be translucent. Generally, by the transparent or translucent accumulated color being overlapped with an opaque color (in the following, "virtual background color") set separately as background, a virtual viewpoint image is generated.

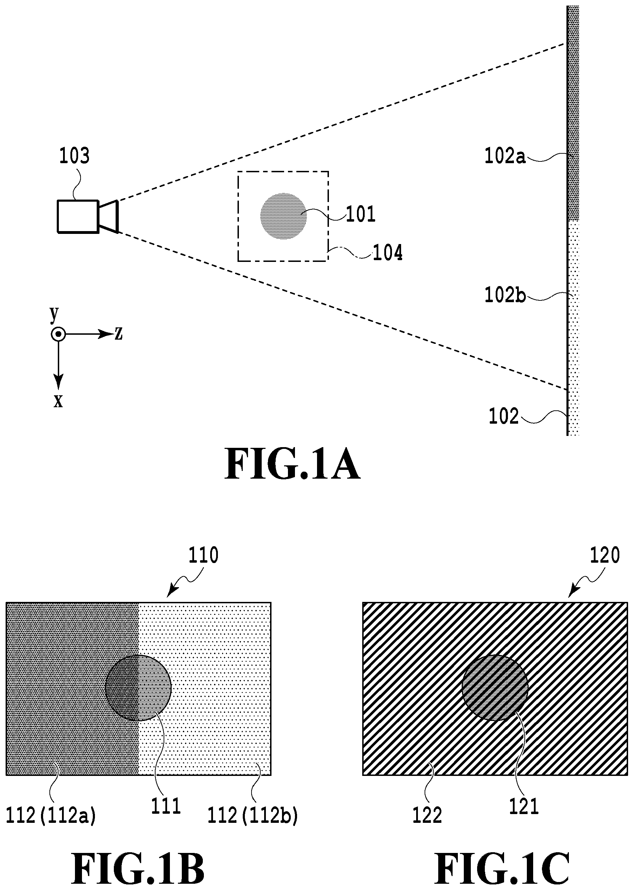

FIG. 1A to FIG. 1C are each a diagram for explaining one example of a virtual viewpoint image that is generated by the conventional NeRF. Specifically, FIG. 1A shows one example of a positional relationship among an object 101, an object 102, and a viewpoint 103. In the following, explanation is given on the assumption that the translucent object 101 is arranged before the object 102, such as a wall, which is taken as a background, and a learning region 104 is set, which includes the object 101 located ahead in a case where the object 101 is viewed from the viewpoint 103 but does not include the object 102 located behind the object 101. Further, explanation is given on the assumption that the object 102 includes parts 102a and 102b whose hues or patterns are different from each other. FIG. 1B and FIG. 1C each show one example of a representation in a case of the positional relationship shown in FIG. 1A. Specifically, FIG. 1B shows one example of a captured image 110 that is obtained by image capturing of an imaging apparatus arranged at the viewpoint 103 and FIG. 1C shows one example of a virtual viewpoint image 120 that is generated by the conventional NeRF in a case where the viewpoint 103 is taken as a virtual viewpoint.

In the captured image 110, a representation 111 corresponding to the object 101 and representations 112 corresponding to the object 102, which are taken as the background of the representation 111, specifically, a representation 112a corresponding to the part 102a and a representation 112b corresponding to the part 102b are included. The object 101 is translucent, and therefore, the representation of the object 102 is transmitted through the representation 111 corresponding to the object 101 and the representation 111 corresponding to the object 101 is a representation in which the color of the object 101 and the color of the object 102 overlap. On the other hand, in the virtual viewpoint image 120, a representation 121 corresponding to the object 101 and a representation 122 by the virtual background color prepared in advance at the background portion of the representation 111 are included. The object 101 is translucent, and therefore, the representation by the virtual background color is transmitted through the representation 121 corresponding to the object 101 and the representation 111 corresponding to the object 101 is a representation in which the color of the object 101 and the color of the virtual background color overlap.

Because of that, in a case where the color of the object 102, that is, the color of the object outside the learning region and the virtual background color are different from each other, the difference between the virtual viewpoint image that is generate by the conventional NeRF and the captured image becomes large, and therefore, it becomes difficult for the learning of NeRF to converge into a correct state. Consequently, in the present embodiment, an aspect is explained in which an image is generated in which only the representation of the object outside the learning region is drawn as color information relating to the object outside the learning region and the pixel value thereof is used as the virtual background color.

<Hardware configuration>

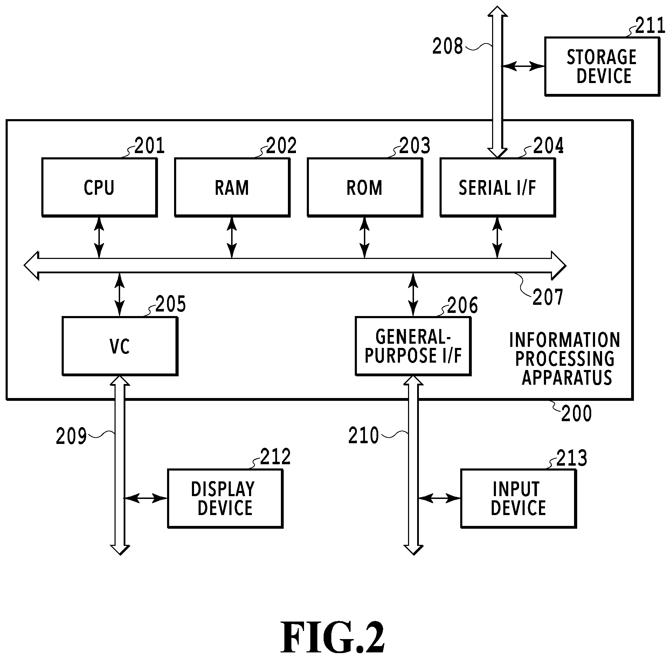

FIG. 2 is a block diagram showing one example of the hardware configuration of an information processing apparatus 200 according to Embodiment 1. The information processing apparatus 200 has, as hardware configurations, a CPU 201, a RAM 202, a ROM 203, a serial I/F (interface) 204, a VC (Video Card) 205, and a general-purpose I/F 206. Each unit the information processing apparatus 200 has as the hardware configuration is connected to one another via a system bus 207 so as to be capable of communication. The CPU 201 executes the OS (Operating System) and various programs stored in the ROM 203, a storage device 211 or the like by using the RAM 202 as a work memory. The CPU 201 controls the entire information processing apparatus 200 via the system bus 207 by executing the various programs. The processing at each step shown in a flowchart, to be described later, is implemented by a program code stored in the ROM 203, the storage device 211 or the like being loaded onto the RAM 202 and by the CPU 201 executing the program code.

The serial bus I/F 204 is an interface including a serial ATA and the like and is connected to the storage device 211 via a serial bus 208. The storage device 211 is a large-capacity storage device, such as an HDD (Hard Disk Drive) or SSD (Solid State Drive). In the first embodiment, explanation is given on the assumption that the storage device 211 is an external device of the information processing apparatus 200, but the information processing apparatus 200 may include the storage device 211 inside thereof. The VC 205 outputs a signal relating to a display image to a display device 212 via a serial bus 209 upon receipt of a control signal from the CPU 201. The display device 212 includes a liquid crystal display and the like and displays the display image based on the signal relating to the display image that the information processing apparatus 200 outputs. The general-purpose I/F 206 is connected to an input device 213, such as a mouse or keyboard, via a serial bus 210 and receives an input signal from the input device 213.

The CPU 201 displays a GUI (Graphical User Interface) that is provided by a program on the display device 212 via the VC 205 and receives an input signal indicating instructions from a user, which are obtained via the input device 213. The information processing apparatus 200 is implemented by, for example, a desktop PC (Personal Computer). The information processing apparatus 200 may also be implemented by a note PC with which the display device 212 is integrated, a tablet PC or the like. Further, the storage device 211 may also be implemented by a medium (portable storage medium) and a drive, such as a disk drive, for accessing the medium, or a reader, such as a memory card reader. As the medium, FD, (Flexible Disk), CD-ROM, DVD, USB memory, MO, flash memory or the like may be used.

<Logical configuration>

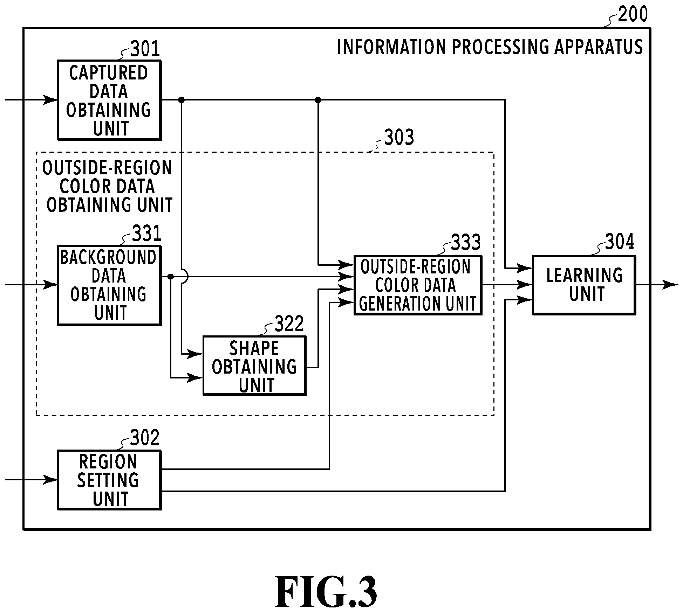

FIG. 3 is a block diagram showing one example of the logical configuration of the information processing apparatus 200 according to Embodiment 1. The information processing apparatus 200 has, as logical configurations, a captured data obtaining unit 301, a region setting unit 302, an outside-region color data obtaining unit 303, and a learning unit 304. The outside-region color data obtaining unit 303 has a background data obtaining unit 331, a shape obtaining unit 332, and an outside-region color data generation unit 333. Each unit the information processing apparatus 200 has as the logical configuration is implemented by the CPU 201 executing a program stored in the ROM 203 by using the RAM 202 as a work memory. All the processing shown in the following does not necessarily need to be executed by the CPU 201 and the information processing apparatus 200 may be configured so that part or all of the processing is performed by one or a plurality of processing circuits other than the CPU 201.

The captured data obtaining unit 301 obtains data of a plurality of captured images (multi-viewpoint images) obtained by capturing an object existing in an image capturing space from a variety of viewpoint positions and camera parameters corresponding to each captured image. This obtaining processing of the captured data obtaining unit 301 is performed based on instructions from a user input via the input device 213. In the following, explanation is given on the assumption that each captured image is an RGB image as one example. Further, in the following, it is assumed that the camera parameters include intrinsic parameters, extrinsic parameters, and distortion parameters of the imaging apparatus capturing a captured image as one example. The intrinsic parameters are parameters representing the principal point position of the imaging apparatus and the focal length of the lens. The extrinsic parameters are parameters representing the position of the imaging apparatus and the orientation of the optical axis of the imaging apparatus (also called "orientation of the imaging apparatus"). The distortion parameters are parameters representing the distortion of the lens of the imaging apparatus. The data of the multi-viewpoint images and the camera parameters corresponding to each captured image, which are obtained by the captured data obtaining unit 301, are transmitted to the shape obtaining unit 332, the outside-region color data generation unit 333, and the learning unit 304.

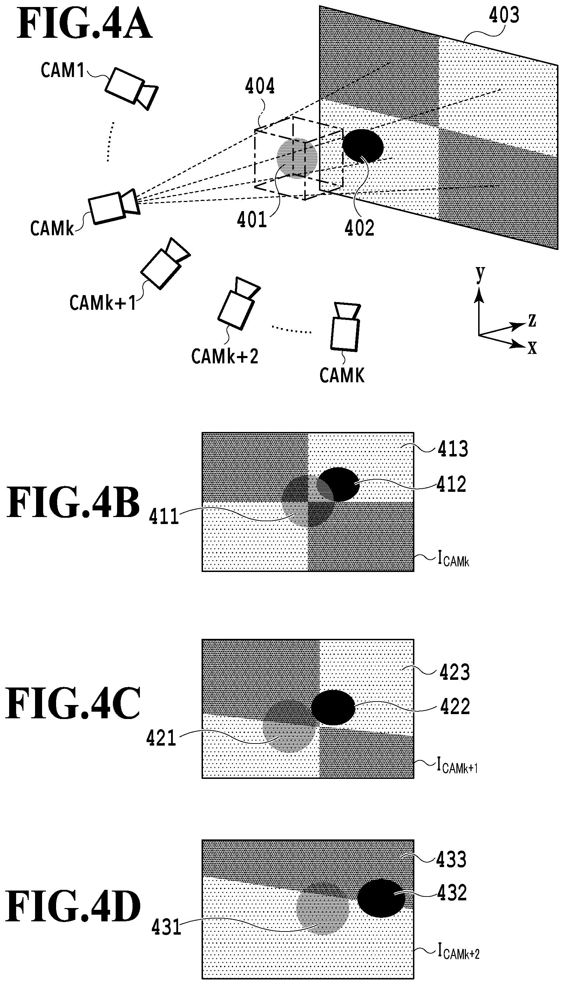

FIG. 4A to FIG. 4D are each a diagram for explaining one example of a captured image $I_{CAM}$ that is obtained by the captured data obtaining unit 301 according to Embodiment 1. Specifically, FIG. 4A shows one example of a positional relationship among imaging apparatuses CAMk (k=1, 2, , K) and objects 401, 402, and 403. In the following, explanation is given on the assumption that the object 401 is a sphere having a translucent color, the object 402 is an ellipsoid having a translucent color, and the object 403 is a flat wall having a translucent color. In FIG. 4A, the rectangular parallelepiped indicated by a one-dot chain line represents a learning region 404.

FIG. 4B to FIG. 4D each show one example of the captured image $I_{CAM}$ that is obtained by image capturing of the imaging apparatuses CAMk to CAMk+2. A captured image $I_{CAMk}$ includes representations 411 to 413 corresponding to the objects 401 to 403, respectively. The object 401 is translucent, and therefore, in the captured image $I_{CAMk}$, the representations 412 and 413 corresponding to the objects 402 and 403 are represented in the state where they are transmitted through the representation 411 corresponding to the object 401. Similarly, a captured image $I_{CAMk+1}$ includes representations 421 to 423 corresponding to the objects 401 to 403, respectively and in the captured image $I_{CAMk+1}$, the representation 423 corresponding to the object 403 is represented in the state where it is transmitted through the representation 421 corresponding to the object 401. Further, similarly, a captured image $I_{CAMk+2}$ includes representations 431 to 433 corresponding to the objects 401 to 403, respectively and in the captured image $I_{CAMk+2}$, the representation 433 corresponding to the object 403 is represented in the state where it is transmitted through the representation 431 corresponding to the object 401.

The region setting unit 302 sets the learning region 404 in the three-dimensional space (virtual space) corresponding to the image capturing space based on instructions from a user, which are input via the input device 213. Information indicating the learning region 404 (in the following, called "learning region information") set by the region setting unit 302 is transmitted to the outside-region color data obtaining unit 303 and the learning unit 304. The outside-region color data obtaining unit 303 obtains outside-region color data, which is information indicating the color outside the learning region 404.

Specifically, the background data obtaining unit 331 obtains data of the background image that is obtained by capturing only the object that is taken as the background (in the following, called "background object") based on instructions from a user, which are input via the input device 213. The background object is, for example, a distant view, a floor surface, such as the surface of land, the wall surface of a structure, such as a building, or installed equipment. In the following, explanation is given on the assumption that the background image is the image obtained by image capturing using the same camera parameters as those of the imaging apparatus having captured each captured image that is obtained by the captured data obtaining unit 301. Further, in the following, explanation is given on the assumption that the data of the captured image is the RGB image like each captured image that is obtained by the captured data obtaining unit 301 and is prepared by the execution of image capturing in advance in the state where an object other than the background object does not exist within the viewing angle.

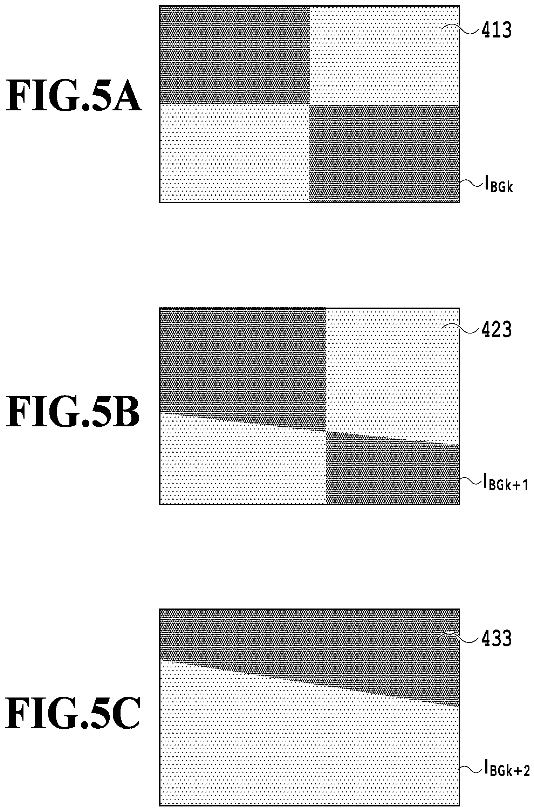

FIG. 5A to FIG. 5C are each a diagram showing one example of a background image $I_{BG}$ that is obtained by the background data obtaining unit 331 according to Embodiment 1. Specifically, FIG. 5A to FIG. 5C indicate in order background images $I_{BGk}$ to $I_{BGk+2}$ corresponding to the captured images $I_{CAMk}$ to $I_{CAMk+2}$ shown in FIG. 4B to FIG. 4D. More specifically, the background images $I_{BGk}$ to $I_{BGk+2}$ shown in FIG. 5A to FIG. 5C are the captured images obtained by image capturing of the imaging apparatuses CAMk to CAMk+2 in the state where the objects 401 and 402 shown in FIG. 4A do not exist. That is, in the background images $I_{BGk}$ to $I_{BGk+2}$ shown in FIG. 5A to FIG. 5C, the background object is the object 403 and in the captured images $I_{CAMk}$ to $I_{CAMk+2}$, only the representations 413 to 433 corresponding to the object 403 are included. The data of the captured images obtained by the background data obtaining unit 331 is transmitted to the shape obtaining unit 332 and the outside-region color data generation unit 333.

The shape obtaining unit 332 obtains the data of the three-dimensional space relating to the object other than the background object (in the following, called "object shape") based on the data of each captured image, the camera parameters corresponding to each captured image, and the data of the background image corresponding to each captured image. Details of object shape obtaining processing will be described later. The data of the object shape obtained by the shape obtaining unit 332 is transmitted to the outside-region color data generation unit 333.

The outside-region color data generation unit 333 generates an image in which only the representation of the object outside the learning region is drawn based on the data of each captured image, the camera parameters corresponding to each captured image, the data of the background image corresponding to each captured image, and the data of the object shape. Details of the generation processing of the image (in the following, called "outside-learning-region image") will be described later. The data of the outside-learning-region image generated by the outside-region color data generation unit 333 is transmitted to the learning unit 304.

The learning unit 304 sets the virtual background color based on the outside-learning-region image and estimates the color and volume density of the object inside the learning region by using the set virtual background color, the data of each captured image, and the camera parameters corresponding to each captured image. Specifically, for example, the learning unit 304 estimates the color and volume density of the three-dimensional space, which is the modeled three-dimensional space set as the learning region, by using a function $F_{\Theta}$ shown in formula (1) below.

$$F_{\Theta} : (x, y, z, \theta, \varphi) \rightarrow (R, G, B, \sigma) \cdots \qquad \text{formula (1)}$$

Here, (x, y, z) represents the position coordinates in the three-dimensional space, $(\theta, \varphi)$ represents the direction in the three-dimensional space, (R, G, B) represents the RGB value indicating the color of the object, which is determined by the position and direction, and $\sigma$ represents the volume density of the object, which is determined by the position, respectively. $F_{\Theta}$ formularized in formula (1) is a function of outputting values indicating the color and volume density to the values indicating the position and direction in the three-dimensional space. In the following, information on the color and information on the volume density in the three-dimensional space, which are represented by the function $F_{\Theta}$, are called together radiance fields. In the present embodiment, explanation is given on the assumption that the function $F_{\Theta}$ is implemented by MLP (Multi-layer perceptron) and the radiance fields are estimated by performing learning of the MLP by deep learning. In this case, the radiance fields are represented as the parameters of the MLP, that is, the weight parameters relating to the node configuring the MLP. Details of radiance fields estimation processing will be described later. The data relating to the radiance fields estimated by the learning unit 304 is output to and stored in the storage device 211 and the like.

<Operation of information processing apparatus 200>

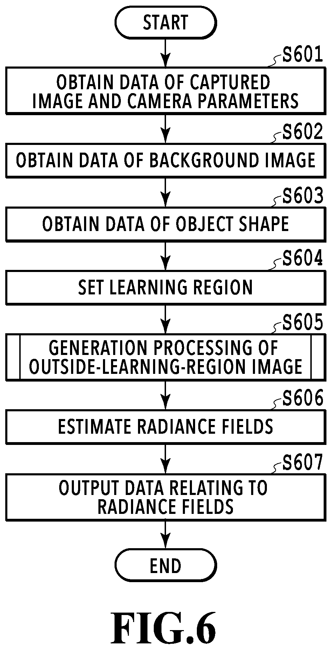

FIG. 6 is a flowchart showing one example of a processing flow in the information processing apparatus 200 according to Embodiment 1. "S" attached to the top of the symbol means a step (process). First, at S601, the captured data obtaining unit 301 obtains the data of a plurality of captured images (multi-viewpoint images) and the camera parameters corresponding to each captured image by reading them from the storage device 211 and so on based on instructions from a user. Next, at S602, the background data obtaining unit 331 obtains the data of the background image corresponding to each captured image obtained at S601 by reading it from the storage device 211 and so on based on instructions from a user.

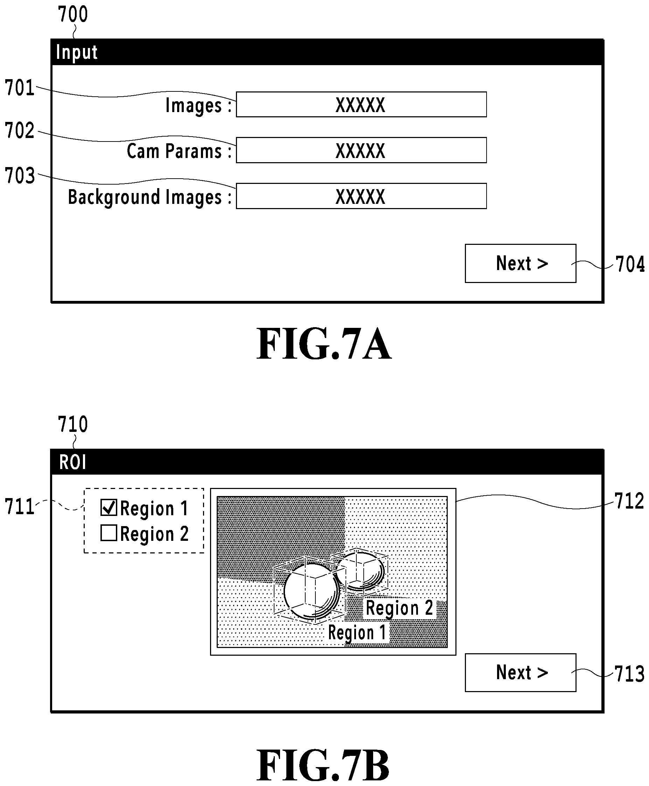

FIG. 7A and FIG. 7B are each a diagram showing one example of GUI 700 and a diagram showing one example of GUI 710, which are displayed and output by the information processing apparatus 200 according to Embodiment 1. Specifically, FIG. 7A shows one example of the GUI 700 for receiving instructions from a user at S601 and S602. In FIG. 7A, data path setting fields 701 to 703 are each in order the region to which to input a data path for accessing the data of the captured image, the region to which to input a data path for accessing the camera parameters, and the region to which to input a data path for accessing the data of the background image. A button 704 is a button that is pressed down in a case where a user gives instructions to continue the processing. In a case where the button 704 is pressed down by a user, S601 and S602 are performed. The GUI 710 shown in FIG. 7B will be described later.

After S601 and S602, at S603, the shape obtaining unit 332 obtains the data of the object shape based on the data of the multi-viewpoint images and the camera parameters both obtained at S601 and the data of the background image obtained at S602. The data of the object shape that is obtained at S602 is only required to be data representing the position and approximate shape of the object in the three-dimensional space and does not need to be data representing fine concavities and convexities in the object and the color of the object. Specifically, for example, the shape obtaining unit 332 first obtains a difference image between the captured image and the background image corresponding to the captured image. Following this, the shape obtaining unit 332 obtains the data of the object shape by estimating the three-dimensional shape of the object based on the obtained difference image corresponding to each captured image and the camera parameters. For the estimation of the object shape, the publicly known estimation technique of a three-dimensional shape may be utilized, such as the visual hull method or the stereo matching method. In the present embodiment, explanation is given on the assumption that the shape obtaining unit 332 obtains the three-dimensional shape data represented by the set of voxels as the data of the three-dimensional shape by using the visual hull method.

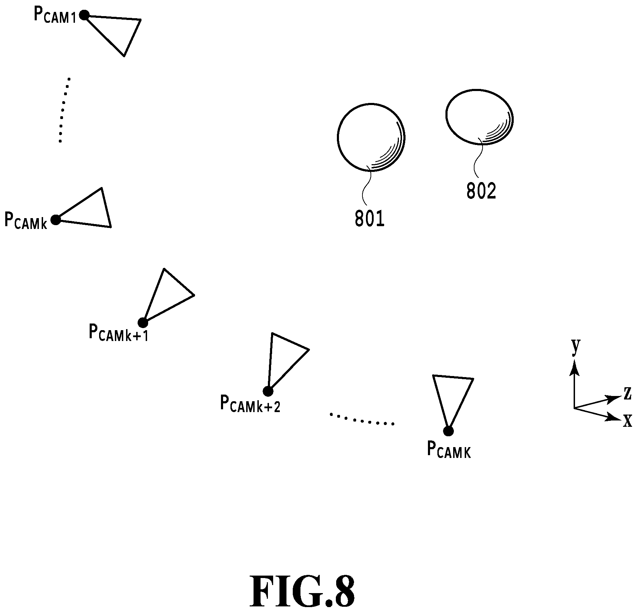

FIG. 8 is a diagram showing one example of an object shape 801 and one example of an object 802, which are obtained by the shape obtaining unit 332 according to Embodiment 1. Specifically, the object shapes 801 and 802 shown in FIG. 8 are object shapes obtained based on the captured image shown as one example in each of FIG. 4B to FIG. 4D and the background image shown as one example in each of FIG. 5A to FIG. 5C. More specifically, the object shape 801 represents the position and approximate shape of the object 401 shown in FIG. 4A and the object shape 802 represents the position and approximate shape of the object 402 shown in FIG. 4A. Further, a position $P_{CAMk}$ shown in FIG. 8 represents the position of the imaging apparatus CAMk shown in FIG. 4A.

After S603, at S604, the region setting unit 302 sets the learning region based on instructions from a user. FIG. 7B shows one example of the GUI 710 for receiving instructions from a user at S604. Specifically, for example, the information processing apparatus 200 presents options of the learning region via the GUI 710 shown in FIG. 7B as one example. In FIG. 7B, a learning region setting field 711 is a region in which candidates of the learning region are presented as options and is also a region for a user to select a region that is taken to be the learning region by a user from among the presented options. An image display field 712 is a region in which the learning regions presented as options are visualized and displayed. In the example shown in FIG. 7B, the state is shown in which bounding boxes with which each of the plurality of object shapes obtained at S603 is circumscribed are presented as options and in the learning region setting field 711, "Region 1" is selected as the learning region. Further, in the example shown in FIG. 7B, in the image display field 712, the sides configuring the learning region (bounding box) presented as an option are projected onto the background image and displayed thereon along with the object shape.

A button 713 is a button a user presses down in a case where the user gives instructions to continue processing. In a case where the button 713 is pressed down by a user, the region selected in the learning region setting field 711 is set as the learning region. The learning region setting method is not limited to the above-described example. For example, the information processing apparatus 200 may associate in advance information indicating the three-dimensional space corresponding to the image capturing space in which the object may exist with information indicating the object for each image capturing environment, such as a studio, and may present the information as options. Further, for example, a user may be enabled to directly designate values relating to the position and shape of the learning region. In the present embodiment, explanation is given on the assumption that the shape of the learning region is a rectangular parallelepiped as one example, but the shape of the learning region is not limited to the rectangular parallelepiped and may be an arbitrary three-dimensional shape, such as a cylinder or sphere.

After S604, at S605, the outside-region color data generation unit 333 generates a corresponding outside-learning-region image for each captured image. Specifically, the outside-learning-region image is generated based on the data of the captured image and the camera parameters both obtained at S601, the data of the background image obtained at S602, the object shape obtained at S603, and the learning region set at S604. Details of outside-learning-region image generation processing at S605 will be described later.

Next, at S606, the learning unit 304 estimates the radiance fields in relation to the learning region set at S604 based on the data of the captured image and the camera parameters both obtained at S601 and the outside-learning-region image generated at S605. Specifically, for example, the learning unit 304 performs processing as follows at S606 as the estimation processing of the radiance fields relating to the learning region. First, the learning unit 304 determines the virtual background color based on the outside-learning-region image. Following this, the learning unit 304 generates a virtual viewpoint image by calculating a weighted sum (accumulated color) of the determined virtual background color and the color of the object inside the learning region based on the radiance fields. Following this, the learning unit 304 performs learning of the MLP by taking the signal including the RGB values of all the pixels of the generated virtual viewpoint image as a prediction signal and the signal including the RGB values of all the pixels of the captured image corresponding to the virtual viewpoint image as a training signal. This learning is performed by, for example, the error back propagation taking the squared Euclid distance between the prediction signal and the training signal as the loss function. Details of virtual viewpoint image generation processing will be described later.

Next, at S607, the learning unit 304 outputs information relating to the radiance fields estimated at S606 to the storage device 211 and the like. After S607, the information processing apparatus 200 terminates the processing of the flowchart shown in FIG. 6.

<Generation processing of outside-learning-region image>

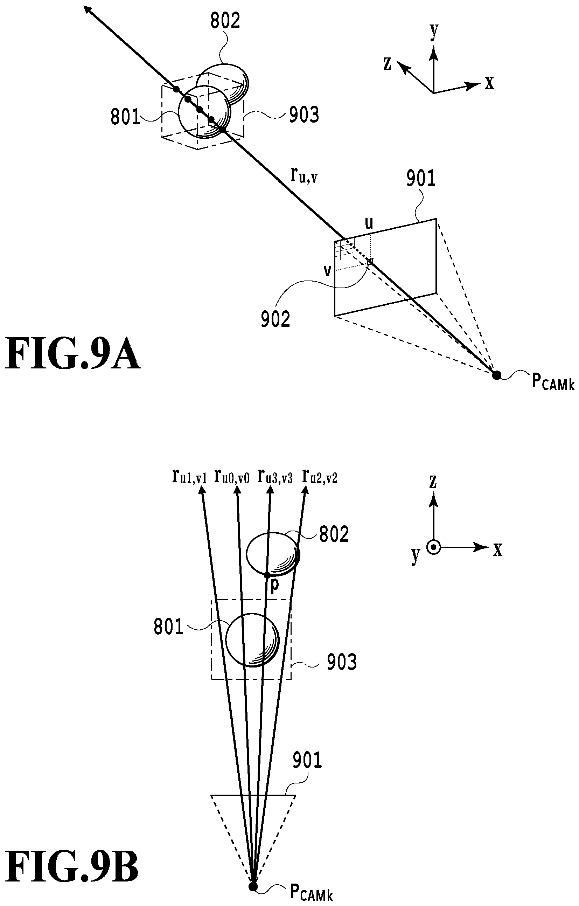

In the present embodiment, explanation is given on the assumption that the RGB value of the outside-learning-region image is determined based on the captured image and the background image in accordance with the state of the intersection of the ray that is determined based on the position of the pixel (in the following, called "pixel position") and the camera parameters, and the object shape as one example. FIG. 9A and FIG. 9B are each a diagram showing one example of a ray $r_{u, v}$ corresponding to a pixel position (u, v) in the outside-learning-region image generation processing according to Embodiment 1. FIG. 9A schematically shows one example of a positional relationship among the ray $r_{u, v}$, the position $P_{CAMk}$ of the imaging apparatus, an image plane 901, a pixel 902 whose pixel position is (u, v), a learning region 903, and the object shapes 801 and 802.

FIG. 9B is a schematic diagram in a case where FIG. 9A is viewed from the y-axis direction and each of rays $r_{u0, v0}$ to $r_{u3, v3}$ represents a ray whose corresponding pixel position is different from one another. In FIG. 9B, the ray $r_{u0, v0}$ intersects only the object shape 801. Further, the ray $u_{u1, v1}$ intersects none of the object shapes. For the pixel corresponding to the ray, such as the ray $r_{u0, v0}$ and the ray $r_{u1, v1}$l, that is, for the pixel corresponding to the ray not intersecting the object shape outside the learning region 903, the RGB value of the background image in which only the representation of the background object is included is used as the RGB value of the outside-learning-region image.

Further, the ray $r_{u2, v2}$ intersects only the object shape 802. In the pixel corresponding to the ray $r_{u2, v2}$, the representation of the object 402 outside the learning region, which is not the background object, is included. Consequently, for the pixel corresponding to the ray, such as the ray $r_{u2, v2}$, the RGB value of the corresponding pixel in the captured image is used as the RGB value of the outside-learning-region image. Further, the ray $r_{u3 v3}$ intersects both the object shape 801 and the object shape 802. Because of this, in the pixel corresponding to the ray $r_{u3 v3}$, the representation of the object 401 inside the learning region is included in the state of overlapping each other before the representation of the object 402 outside the learning region. Consequently, for the pixel corresponding to the ray, such as the ray $r_{u3 v3}$, the color of the object 402 outside the learning region, which is occluded by the object 401 inside the learning region, is estimated and the RGB value indicating the estimated color is used as the RGB value of the outside-learning-region image.

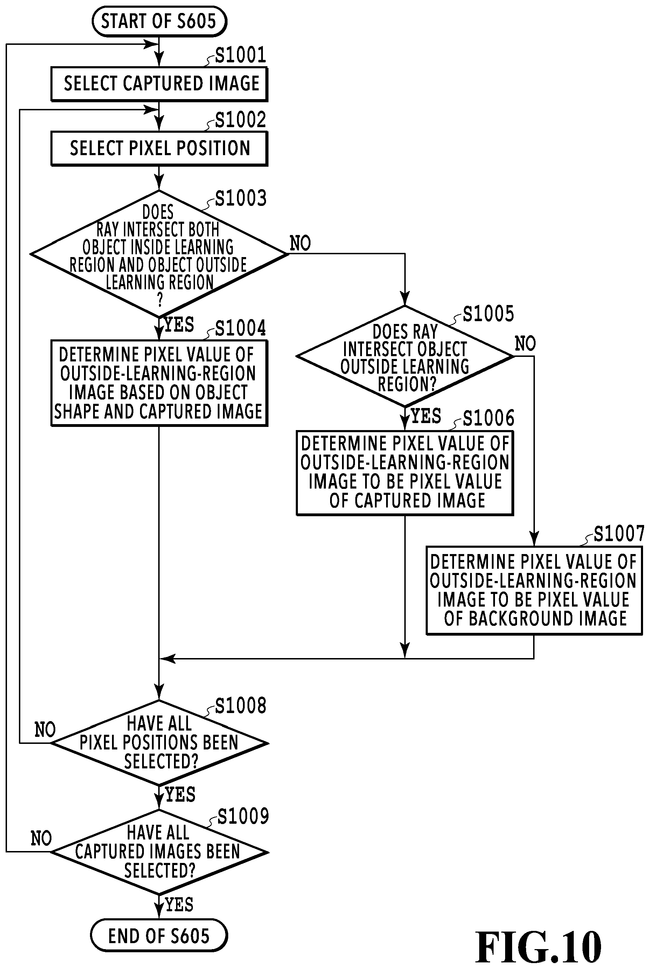

FIG. 10 is a flowchart showing one example of a flow of the outside-learning-region image generation processing in the outside-region color data generation unit 333 according to Embodiment 1 and is a flowchart showing one example of a flow of the processing at S605 shown in the flowchart in FIG. 6. This flowchart is performed after the processing at S604. First, at S1001, the outside-region color data generation unit 333 selects one captured image $I_{CAM}$ whose corresponding outside-learning-region image has not been generated yet. Next, at S1002, the outside-region color data generation unit 333 selects one pixel position (u, v) whose RGB value has not been determined yet in the outside-learning-region image corresponding to the one captured image $I_{CAM}$ selected at S1001.

Next, at S1003, the outside-region color data generation unit 333 judges whether or not the representation of the object 401 inside the learning region and the representation of the object 402 outside the learning region are representations that overlap each other at the pixel position selected at S1002. That is, at S1003, the outside-region color data generation unit 333 judges whether or not the ray corresponding to the pixel position selected at S1002 intersects both the object shape 801 inside the learning region and the object shape 802 outside the learning region. In a case where the ray is judged to intersect both the object shape 801 inside the learning region and the object shape 802 outside the learning region like the ray $r_{u3 v3}$ shown in FIG. 9B at S1003, the outside-region color data generation unit 333 performs processing at S1004, and in the other cases, the outside-region color data generation unit 333 performs processing at S1005.

At S1004, the outside-region color data generation unit 333 determines the pixel value at the pixel position (u, v) selected at S1002 in the outside-learning-region image corresponding to the captured image selected at S1001 based on the object shape and the captured image. Specifically, the outside-region color data generation unit 333 determines the pixel value at the pixel position (u, v) by estimating the color of the object 402 outside the learning region, which is occluded by the object 401 inside the learning region, for the pixel position (u, v) selected at S1002. For example, the outside-region color data generation unit 333 determines the pixel value at the pixel position (u, v) by performing the following processing at S1004.

First, the outside-region color data generation unit 333 specifies the object shape (in the example in FIG. 9B, the object shape 802) outside the learning region, whose intersection with the ray $r_{u, v}$ is the closest from the position of the imaging apparatus corresponding to the captured image selected at S1001. Following this, the outside-region color data generation unit 333 obtains the three-dimensional coordinates of an intersection p of the ray $r_{u, v}$ and the specified object shape. Following this, the outside-region color data generation unit 333 judges whether or not the representation of the object corresponding to the object shape is included in the pixel corresponding to the intersection p for each captured image not selected at S1001. Specifically, the outside-region color data generation unit 333 judges whether or not the voxel whose distance from the position of the imaging apparatus is the shortest among the voxels configuring the object shape intersecting the ray $r_{u, v}$ is the voxel configuring the object shape outside the learning region, which is the closest from the position. In a case where the voxel is the voxel configuring the object shape, the outside-region color data generation unit 333 judges that the representation of the object corresponding to the object shape is included. In this case, the outside-region color data generation unit 333 determines the average RGB value of the pixel determined to include the representation of the object as an RGB value $I_{OS}$ (u, v) of the outside-learning-region image.

At S1005, the outside-region color data generation unit 333 judges whether or not the representation of the object 402 outside the learning region is included at the pixel position (u, v) selected at S1002. For example, in a case where the ray corresponding to the pixel position intersects the voxel configuring the object shape outside the learning region like the ray $r_{u2, v2}$ shown in FIG. 9B, the representation of the object outside the learning region is judged to be included at the pixel position. In a case where the representation of the object outside the learning region is judged to be included at the pixel position at S1005, the outside-region color data generation unit 333 performs processing at S1006, and in the other cases, the outside-region color data generation unit 333 performs processing at S1007.

At S1006, the outside-region color data generation unit 333 determines an RGB value $I_{CAM}$ (u, v) of the captured image selected at S1001 as the RGB value $I_{OS}$ (u, v) of the outside-learning-region image. Further, at S1007, the outside-region color data generation unit 333 determines an RGB value $I_{BK}$ (u, v) of the background image corresponding to the captured image selected at S1001 as the RGB value $I_{OS}$ (u, v) of the outside-learning-region image.

After S1005, S1006, or S1007, at S1008, the outside-region color data generation unit 333 judges whether or not all the pixel positions have been selected at S1002 in the outside-learning-region image corresponding to the captured image $I_{CAM}$ selected at S1001. In a case where at least part of the pixel positions of the outside-learning-region image are judged not to have been selected at S1008, the outside-region color data generation unit 333 performs the processing at S1002 to S1008 until all the pixel positions are judged to have been selected at S1008. In a case where all the pixel positions of the outside-learning-region image are judged to have been selected at S1008, the outside-region color data generation unit 333 performs processing at S1009.

At S1009, the outside-region color data generation unit 333 judges whether or not all the captured images have been selected at S1001. In a case where at least part of the captured images are judged not to have been selected at S1009, the outside-region color data generation unit 333 repeatedly performs the processing at S1001 to S1009 until all the captured images are judged to be have been selected at S1009. In a case where all the captured images are judged to be have been selected at S1009, the outside-region color data generation unit 333 terminates the processing of the flowchart shown in FIG. 10, that is, the outside-learning-region image generation processing at S605 shown in FIG. 6.

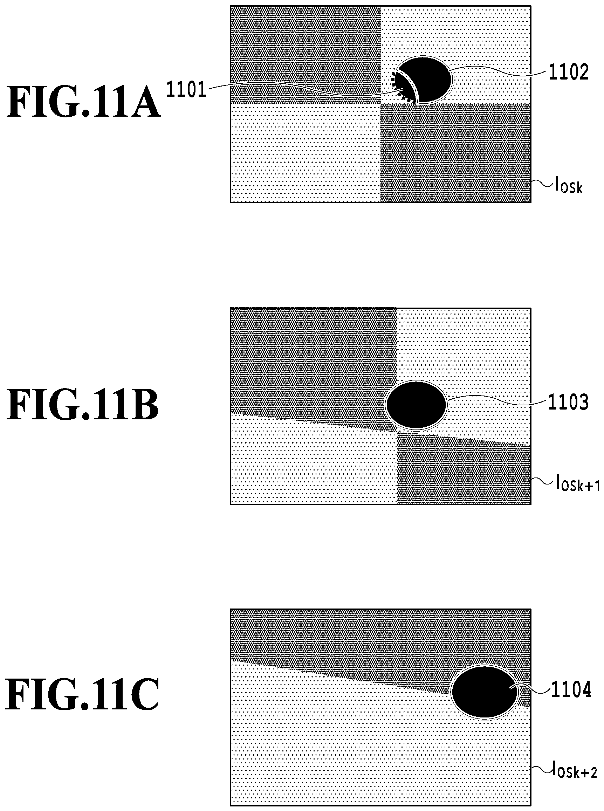

FIG. 11A to FIG. 11C are each a diagram showing one example of an outside-learning-region image $I_{OS}$ that the outside-region color data generation unit 333 generates according to Embodiment 1. Specifically, FIG. 11A to FIG. 11C each show one example of the outside-learning-region image $I_{OS}$ that is generated based on the captured image $I_{CAM}$ shown in each of FIG. 4B to FIG. 4D and the background image $I_{BG}$ shown in each of FIG. 5A to FIG. 5C in a case where the learning region is taken as the learning region 404 shown in FIG. 4A. More specifically, FIG. 11A to FIG. 11C each show in order one example of each of outside-learning-region images $I_{OSk}$ to $I_{OSk+2}$ corresponding to the captured images $I_{CAMk}$ to $I_{CAMk+2}$ shown in each of FIG. 4B to FIG. 4D. Each of the outside-learning-region images $I_{OSk}$ to $I_{OSk+2}$ is an image including only representations 1102 to 1104 corresponding to the object 402 outside the learning region and the representation of the object 403.

The region 1101 surrounded by a broken line in FIG. 11A is the region in which the representation of the object 401 inside the learning region overlaps the representation of the object 402 outside the learning region in the captured image and the RGB value in the region 1101 is the value determined at S1004. Further, the regions of the representations 1102 to 1104 surrounded by a double line are each the region in which the representation of the object 402 does not overlap the representation of the object 401 in the captured image and the RGB value in regions of the representations 1102 to 1104 is the same value as that of the captured image. The remaining region is the region including the representation other than the representation of the object 402 in the captured image and the RGB value of the region is the same value as that of the captured image.

<Generation processing of virtual viewpoint image>

An RGB value $I_{VR}$ (u, v) of a virtual viewpoint image is calculated as a weighted sum of the RGB value inside the learning region and the RGB value of the virtual background color with the opacity inside the learning region being taken as a weight coefficient in accordance with, for example, following formulas (2) to (6).

$$I_{VR} (u, v) = C_A (r_{u, v}) + (1 - Opa (r_{u, v})) \cdot C_B \qquad \cdots \text{formula (2)}$$

$$C_A\left(r_{u,\ v}\right) = \sum_{i=1}^{N} T_i \alpha_i c_i \qquad \cdots \text{ formula (3)}$$

$$T_i = \exp\left(-\sum_{j=1}^{i-1} \sigma_j \delta_j\right) \qquad \cdots \text{ formula (4)}$$

$$\alpha_i = 1 - \exp(-\sigma_i \delta_i) \qquad \cdots \text{ formula (5)}$$

$$\text{Opa}\left(r_{u,\ v}\right) = 1 - \exp\left(-\sum_{i=1}^{N} \sigma_i \delta_i\right) \qquad \cdots \text{ formula (6)}$$

Here, $C_A$ $(r_{u,\ v})$ is the RGB value of the object inside the learning region indicated by the radiance fields and Opa $(r_{u,\ v})$ is opacity. $C_B$ is the RGB value of the virtual background color. Further, formulas (3) to (5) correspond to the publicly known volume rendering, i is the index of the sampling point on the ray $r_{u,\ v}$, N is the number of sampling points, and $T_i$ is the accumulated transmittance from the position of the imaging apparatus to the sampling point. Further, $\alpha_i$ is the opacity of the sampling point, $c_i$ is the RGB value that the above-described function $F_\Theta$ outputs for the sampling point, and $\sigma_i$ is the volume density that the function $F_\Theta$ outputs for the sampling point. Further, $\delta_j$ is the distance from the jth sampling point to the (j+1)th sampling point.

In a case where an object whose color is opaque exists on the ray $r_{u,\ v}$ inside the learning region, the opacity of the representation of the object is 1 and the weight relating to the virtual background color is 0. Consequently, in this case, the color of the pixel in the virtual viewpoint image is not affected by the virtual background color. Further, in a case where any object does not exist on the ray $r_{u,\ v}$ inside the learning region, the opacity of the representation of the object is 0 and the weight relating to the virtual background color is 1. Consequently, in this case, the color of the pixel in the virtual viewpoint image is equal to the virtual background color. Further, in a case where the RGB value of the virtual background color is taken to be (0, 0, 0), the meaning of formula 2 is the same as that of $I_{VR}$ (u, v) = $C_A$ $(r_{u,\ v})$. Consequently, in this case, the RGB value $C_A$ $(r_{u,\ v})$ of the object inside the learning region is the RGB value $I_{VR}$ (u, v) of the virtual viewpoint image as it is irrespective of the opacity Opa $(r_{u,\ v})$ of the representation of the object.

In the present embodiment, the RGB value $I_{OS}$ (u, v) at the pixel position (u, v) of the outside-learning-region image is used as the RGB value of the virtual background color. In this case, the RGB value $I_{VR}$ (u, v) of the virtual viewpoint image may be determined by using, for example, next formula (7).

$$I_{VR}\ (u, v) = C_A\ (r_{u,\ v}) + (1 - \text{Opa}\ (r_{u,\ v})) \cdot I_{OS}\ (u, v) \qquad \cdots \text{ formula (7)}$$

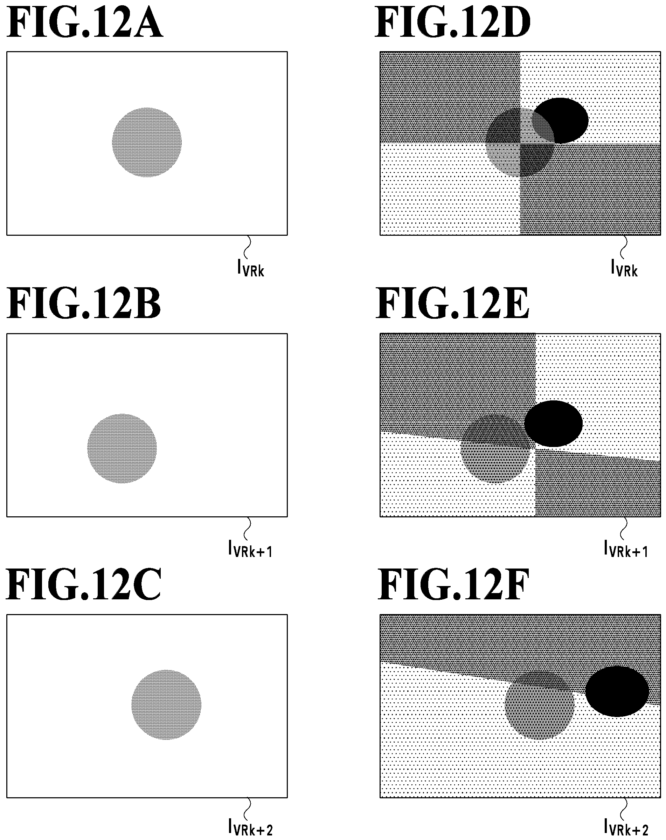

FIG. 12A to FIG. 12F are each a diagram showing one example of a virtual viewpoint image $I_{VR}$ that the learning unit 304 generates according to Embodiment 1. Specifically, FIG. 12A to FIG. 12F each show one example of the virtual viewpoint image that is generated in a case where the function $F_\Theta$ represents the radiance fields inside the learning region 404 shown in FIG. 4A accurately. More specifically, FIG. 12A to FIG. 12C each show in order one example of each of virtual viewpoint images $I_{VRk}$ to $I_{VRk+2}$ corresponding to each of the captured images $I_{CAMk}$ to $I_{CAMk+2}$ shown in FIG. 4B to FIG. 4D, which are generated in a case where the virtual background color is taken to be white. These virtual viewpoint images $I_{VRk}$ to $I_{VRk+2}$ do not include the representation of the object 402 outside the learning region. Consequently, the difference form the captured images $I_{CAMk}$ to $I_{CAMk+2}$ including the representation of the object 402 outside the learning region is large despite the accurate representation of the radiance fields inside the learning region. Consequently, as described above, in a case where the radiance fields inside the learning region are estimated by taking the difference between the captured images $I_{CAMk}$ to $I_{CAMk+2}$ and the virtual viewpoint images $I_{VRk}$ to $I_{VRk+2}$ as the loss, it becomes difficult for learning to converge into a correct state.

In contrast to this, FIG. 12D to FIG. 12F each show in order one example of each of the virtual viewpoint images $I_{VRk}$ to $I_{VRk+2}$ that are generated in a case where the RGB value of each of the outside-learning-region images $I_{OSk}$ to $I_{OSk+2}$ shown in FIG. 11A to FIG. 11C is set as the virtual background color. In the virtual viewpoint images $I_{VRk}$ to $I_{VRk+2}$ shown in FIG. 12D to FIG. 12F, the color of the object 402 outside the learning region is reflected in the virtual background color. Because of this, the difference between the virtual viewpoint images $I_{VRk}$ to $I_{VRk+2}$ and the captured images $I_{CAMk}$ to

$I_{CAMk+2}$ becomes small, and therefore, the above-described learning may be suppressed from becoming difficult to converge into a correct state.

According to the information processing apparatus 200 configured as described above, even in a case where the learning region is limited to a narrow space, the radiance fields inside the learning region may be estimated with accuracy.

In the present embodiment, explanation is given on the assumption that the captured image and the background image are RGB images as one example, but the captured image and the background image may be images represented in another format, such as grayscale images, XYZ images, and YUV images. Further, in the present embodiment, explanation is given on the assumption that the color of the object is determined by the position and direction as one example, but the color of the object may be determined only by the position without depending on the direction.

Further, in a case where that the representation of the object 401 inside the learning region and the representation of the object 402 outside the learning region do not overlap each other in any captured image is clear in advance, the following processing may be performed in the outside-learning-region image generation processing at S605. Specifically, in this case, after the pixel position is selected at S1002, the processing at S1003 and S1004 may be skipped and the determination processing at S1005 may be performed.

Further, in a case where the object outside the learning region does not exist other than the background object (in the example in FIG. 4A, the object 403), in the outside-learning-region image generation processing at S605, the background image may be used as the outside-learning-region image as it is. In this case, the shape obtaining unit 332 and the three-dimensional shape data obtaining processing relating to the object at S603 are no longer indispensable.

Further, in a case where the three-dimensional shape about all the objects included as representations in the captured image is estimated in the three-dimensional shape data obtaining processing relating to the object at S603, the following processing may be performed in the outside-learning-region image generation processing at S605. Specifically, in this case, the processing at S1005 and S1007 may be skipped. In that case, the background data obtaining unit 331 and the background image data obtaining processing at S602 are no longer indispensable.

Further, the captured image may be a moving image including a plurality of frames. In this case, the background image may be generated based on the plurality of frames by the publicly known dynamic background estimation method.

[Embodiment 2]

In Embodiment 1, the aspect is explained in which the radiance fields are estimated based on the captured image on the assumption that the object outside the learning region does not exist before the object inside the learning region in a case where the object outside the learning region is viewed from the position of the imaging apparatus. However, depending on the positional relationship between the imaging apparatus and the object, there is a case where it is difficult to perform image capturing in the state where the object outside the learning region does not exist before the object inside the learning region in a case where the object outside the learning region is viewed from the position of the imaging apparatus. In a case where the object outside the learning region exists before the object inside the learning region in a case where the object outside the learning region is viewed from the positions of at least part of the imaging apparatuses among the plurality of imaging apparatuses, information on the object that is not the learning target (that does not exist inside the learning region) mingles with the training signal. Because of that, in the case such as this, with the learning method of radiance fields in the information processing apparatus 200 according to Embodiment 1, it becomes difficult to correctly learn the radiance fields inside the learning region. In Embodiment 2, a learning method of radiance fields is explained, which is capable of estimating the radiance fields with accuracy in the case such as this as well.

The hardware configuration and the logical configuration of the information processing apparatus 200 according to Embodiment 2 are the same as those of the information processing apparatus 200 according to Embodiment 1, and therefore, in Embodiment 2, only differences from Embodiment 1 are explained. Further, the flow of the entire processing that is performed in the information processing apparatus 200 according to Embodiment 2 is the same as that of the information processing apparatus 200 according to Embodiment 1. However, the outside-learning-region image generation processing at S605 shown in FIG. 6 and the radiation fields estimation processing at S606 are different from those of the information processing apparatus 200 according to Embodiment 1. Because of this, in Embodiment 2, portions in which the processing is different from that in Embodiment 1 are explained mainly. In the following, the same configuration as that of Embodiment 1 and the same processing step as that of Embodiment 1 are explained by attaching the same symbol thereto.

<Generation processing of outside-learning-region image according to Embodiment 2>

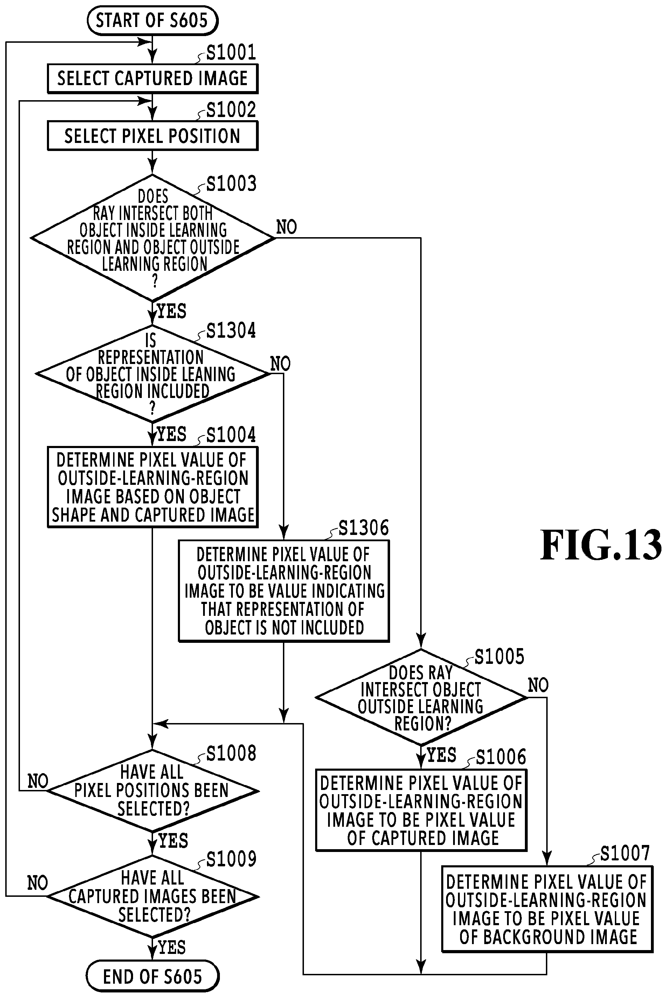

FIG. 13 is a flowchart showing one example of a flow of outside-learning-region image generation processing in the outside-region color data generation unit 333 according to Embodiment 2 and is a flowchart showing one example of a flow of the processing at S606 shown in the flowchart in FIG. 6. This flowchart is performed after the processing at S604. First, the outside-region color data generation unit 333 according to Embodiment 2 (in the following, simply called "outside-region color data generation unit 333") performs the processing at S1001 to S1003. The processing at S1001 to S1003 are described above, and therefore, explanation is omitted.

In a case where the ray is judged to intersect both the object shape 801 inside the learning region and the object shape 802 outside the learning region like the ray $r_{u3, v3}$ shown in FIG. 9B at S1003, the outside-region color data generation unit 333 performs processing at S1304. In the other cases, the outside-region color data generation unit 333 performs the processing at S1005 to S1007 appropriately. The processing at S1005 to S1007 is described above, and therefore, explanation is omitted. At S1304, the outside-region color data generation unit 333 determines whether or not the representation of the object inside the learning region is included at the pixel position (u, v) selected at S1002.

Specifically, the outside-region color data generation unit 333 judges whether or not the voxel whose distance form the position of the imaging apparatus is the shortest among the voxels configuring the object shape intersecting the ray $r_{u, v}$ exists inside the learning region. In a case where the voxel whose distance form the position of the imaging apparatus is the shortest among the voxels configuring the object shape exists inside the learning region, the outside-region color data generation unit 333 judges that the representation of the object inside the learning region is included at the pixel position (u, v). In a case where the representation of the object inside the learning region is judged to be included at the pixel position (u, v) at S1304, the outside-region color data generation unit 333 performs the processing at S1004, and in the other cases, the outside-region color data generation unit 333 performs processing at S1306. The processing at S1004 is described above, and therefore, explanation is omitted.

At S1306, the outside-region color data generation unit 333 determines a value indicating that the representation of the object inside the learning region is not included at the pixel position (u, v) selected at S1002 as the RGB value $I_{OS}$ (u, v) of the outside-learning-region image. Here, a value indicating that the representation of the object inside the learning region is not included is, for example, a negative value, such as (-1, - 1, -1), which cannot be taken as an RGB value. After S1004, S1306, S1006, or S1007, the outside-region color data generation unit 333 performs the processing at S1008 and S1009 appropriately. The processing at S1008 and S1009 is described above, and therefore, explanation is omitted. In a case where all the captured images are judged to be have been selected at S1009, the outside-region color data generation unit 333 terminates the processing of the flowchart shown in FIG. 13, that is, the outside-learning-region image generation processing at S605 shown in FIG. 6.

<Estimation processing of radiance fields according to Embodiment 2>

As in Embodiment 1, the learning unit 304 according to Embodiment 2 generates a virtual viewpoint image by using the virtual background color determined based on the outside-learning-region image and performs learning by taking the distance between the prediction signal including the RGB value of the virtual viewpoint image and the training signal including the RGB value of the captured image as a loss. In the following, the learning unit 304 according to Embodiment 2 is simply described as "learning unit 304". Here, the learning unit 304 performs learning by calculating a loss using the pixel included in the region other than the region in which the representation of the object inside the learning region is not captured because the object inside the learning region is occluded by the object outside the learning region. The region other than the region in which the representation of the object inside the learning region is not captured is, in other words, the following region in the captured image. The region is the region in which the representation of the object inside the learning region is visible and the region in which the representation of the object outside the learning region is visible and which corresponds to the direction in which the object inside the learning region is not occluded by the object in a case where the object inside the learning region is viewed from the position of the imaging apparatus. Specifically, the learning unit 304 refers to the outside-learning-region image generated at S605 and excludes the pixel whose RGB value indicates that the representation of the object inside the learning region is not included from the prediction signal and the training signal.

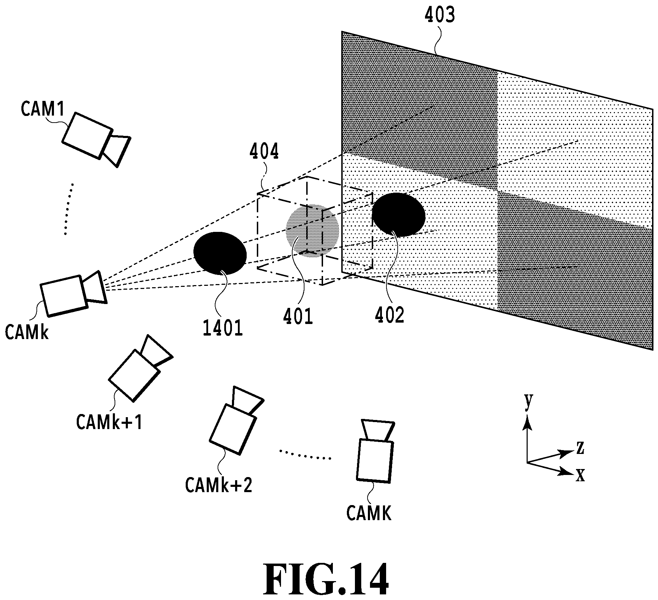

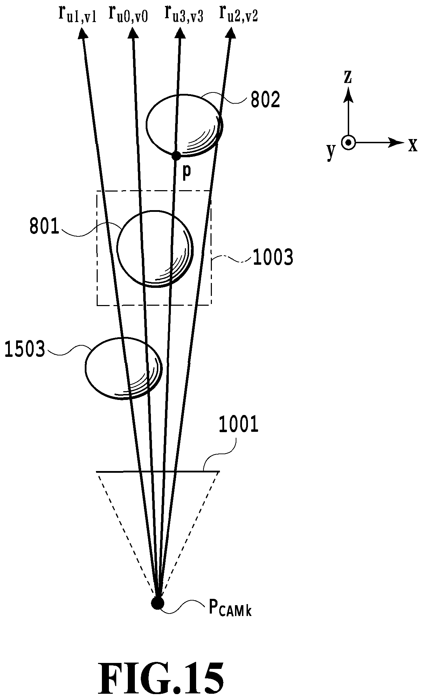

FIG. 14 shows one example of a positional relationship among the imaging apparatuses CAMk (k=1, 2, ⋯, K), the objects 401, 402, and 403, and an object 1401 according to Embodiment 2. In the following, explanation is given on the assumption that the object 1401 is an ellipsoid having an opaque color and is arranged before the learning region 404 in case where the object 1401 is viewed from the position of the imaging apparatus CAMk. FIG. 15 is a diagram showing one example of the ray $r_{u, v}$ corresponding to the pixel position (u, v) in the outside-learning-region image generation processing according to Embodiment 2 and each of the rays $r_{u0, v0}$ to $r_{u3, v3}$ represents the ray whose corresponding pixel position is different from one another. Further, an object shape 1503 shown in FIG. 15 represents the object shape corresponding to the object 1401. The data of the object shape 1503 is obtained by the shape obtaining unit 332 like the object shapes 801 and 802. In FIG. 15, the ray $r_{u0, v0}$ intersects the object 1503 outside the learning region at the position closer to the position $P_{CAMk}$ of the imaging apparatus than to the object shape 801 inside the learning region.

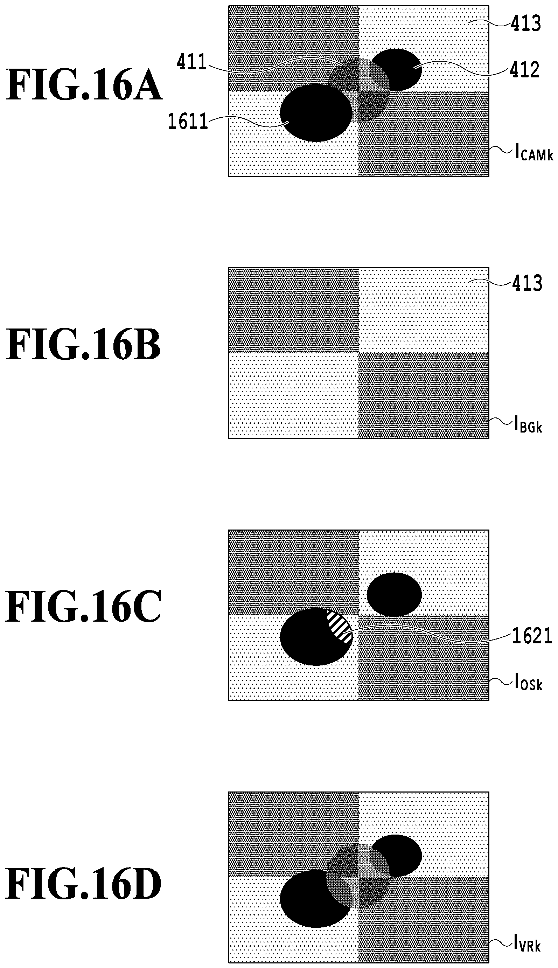

FIG. 16A to FIG. 16D are each a diagram showing one example of the captured image $I_{CAMk}$, the background image $I_{BGk}$, the outside-learning-region image $I_{OSk}$, and the virtual viewpoint image $I_{VRk}$ according to Embodiment 2. Specifically, FIG. 16A shows one example of the captured image $I_{CAMk}$ obtained by image capturing of the imaging apparatus CAMk. In the captured image $I_{CAMk}$, part of the representation 411 of the object 401 inside the learning region is no longer seen because of being occluded by a representation 1611 of the object 1401 outside the learning region. FIG. 16B shows one example of the background image $I_{BGk}$ corresponding to the captured image $I_{CAMk}$ in FIG. 16A. The background image $I_{BGk}$ shown in FIG. 16B is the same as the background image $I_{BGk}$ shown in FIG. 5A.

FIG. 16C shows one example of the outside-learning-region image $I_{OSk}$ corresponding to the captured image $I_{CAMk}$ in FIG. 16A. In FIG. 16C, a region 1621 indicated by the texture of slashes is the area in which the object 1401 outside the learning region is captured in an overlapping manner before the object 401 inside the learning region. Because of this, the RGB value of the pixel in the region 1621 is the value indicating that the representation of the object 401 inside the learning region is not included in the outside-learning-region image $I_{OSk}$. FIG. 16D shows one example of the virtual viewpoint image $I_{VRk}$ corresponding to the captured image $I_{CAMk}$ in FIG. 16A, which is obtained in a case where the radiance fields inside the learning region are represented accurately. In the portion corresponding to the region 1621 shown in FIG. 16C, there is a difference between the virtual viewpoint image $I_{VRk}$ and the captured image, but the pixel inside this region 1621 is excluded in a case where the loss is calculated, and therefore, this does not contribute to the estimation of radiance fields, that is, the above-described learning of MLP.

As above, in Embodiment 2, the information processing apparatus 200 is configured so that the loss is calculated by excluding the pixel not including the representation of the object inside the learning region in a case of the estimation of radiance fields, that is, in a case of the above-described learning of MLP. According to the information processing apparatus 200 thus configured, even in a case where the object outside the learning region is captured in an overlapping manner before the object inside the learning region in the captured image, the radiance fields inside the learning region may be estimated with accuracy.

[Other Embodiments]

Some embodiment(s) of the present disclosure can also be realized by a computer of a system or apparatus that reads out and executes computer-executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer-executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer-executable instructions. The computer-executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

According to the present disclosure, even in a case where the learning region is limited to a narrow space, the radiance fields inside the learning region may be estimated with accuracy.

While the present disclosure has described exemplary embodiments, it is to be understood that some embodiments of the disclosure are not limited to the disclosed exemplary embodiments. The scope of the following claims is to be accorded the broadest interpretation so as to encompass all such modifications and equivalent structures and functions.

**Claims**

1. An information processing apparatus (200) comprising:

   a captured data obtaining unit (301) configured to obtain data of a plurality of captured images obtained by capturing an object existing in a predetermined image capturing space from a plurality of viewpoints and camera parameters corresponding to each of the plurality of viewpoints in a case where image capturing is performed;
   an outside-region color data obtaining unit (303) configured to obtain information on a color relating to an outside-region object, which is the object existing outside a learning region set in a three-dimensional space corresponding to the predetermined image capturing space; and
   a learning unit (304) configured to perform learning of spatial information, which is information relating to a color and volume density at each position inside the learning region, based the data of a plurality of captured images, the camera parameters corresponding to each of the plurality of viewpoints, and the information on a color relating to an outside-region object, wherein the learning unit (304) performs the learning of spatial information based on a difference between a rendering color including an accumulated color obtained by accumulating the spatial information and a color relating to the outside-region object, and a color of the captured image.

2. The information processing apparatus according to claim 1, further comprising:
   a region setting unit (302) configured to set the learning region within the three-dimensional space.

3. The information processing apparatus according to claim 1 or 2, wherein
   the learning unit performs the learning of spatial information so that a difference between the rendering color and the color of the captured image becomes smaller.

4. The information processing apparatus according to any one of claims 1 to 3, wherein the learning unit calculates:
   the accumulated color and opacity of the accumulated color by accumulating the spatial information along a ray within the three-dimensional space determined based on a position of a pixel in the captured image and the camera parameters; and
   the rendering color by overlapping the accumulated color and an outside-region color determined based on information on a color relating to the outside-region object in accordance with a blending ratio based on the opacity.

5. The information processing apparatus according to any one of claims 1 to 4, wherein
   the outside-region color data obtaining unit obtains data of an image in which only the outside-region object is captured as information on a color relating to the outside-region object.

6. The information processing apparatus according to any one of claims 1 to 5, further comprising:

   a shape obtaining unit (332) configured to obtain shape information indicating a shape relating to at least part of the outside-region object, wherein
   the outside-region color data obtaining unit calculates information on a color relating to the outside-region object based on the captured image and the shape information.

7. The information processing apparatus according to any one of claims 1 to 6, wherein the spatial information includes network parameters in multi-layer perceptron and the learning unit performs the learning of spatial information by an error back propagation method taking a signal relating to the rendering color as a prediction signal and a signal relating to the color of the captured image as a training signal.

8. The information processing apparatus according to any one of claims 1 to 6, wherein
   the learning unit performs the learning of spatial information by excluding a region from the learning region, in which an inside-region object, which is the object inside the learning region, is occluded by the outside-region object.

9. The information processing apparatus according to claim 8, wherein

   the spatial information includes network parameters in multi-layer perceptron and
   the learning unit performs the learning of spatial information by an error back propagation method taking a signal relating to the rendering color as a prediction signal and a signal relating to the color of the captured image as a training signal with the prediction signal and the training signal corresponding to a region in which the inside-region object is occluded by the outside-region object being excluded.

10. The information processing apparatus according to any one of claims 1 to 9, wherein the spatial information is information relating to radiance fields.

11. An information processing method comprising:

   a captured data obtaining step of obtaining data of a plurality of captured images obtained by capturing an object existing in a predetermined image capturing space from a plurality of viewpoints and camera parameters corresponding to each of the plurality of viewpoints in a case where image capturing is performed;
   an outside-region color data obtaining step of obtaining information on a color relating to an outside-region object, which is the object existing outside a learning region set in a three-dimensional space corresponding to the predetermined image capturing space; and
   a learning step of performing learning of spatial information, which is information relating to a color and volume density at each position inside the learning region, based the data of a plurality of captured images, the camera parameters corresponding to each of the plurality of viewpoints, and the information on a color relating to an outside-region object, wherein the learning of spatial information is performed based on a difference between a rendering color including an accumulated color obtained by accumulating the spatial information and a color relating to the outside-region object, and a color of the captured image.

12. A program for causing a computer to function as the information processing apparatus according to any one of claims 1 to 10.

**FIG.1A**

**FIG.1B**

**FIG.1C**

**FIG.2**

**FIG.3**

# FIG.4A

CAM1

404

403

CAMk

401

402

CAMk+1

CAMk+2

CAMK

y
z
x

# FIG.4B

411
413
412
$I_{CAMk}$

# FIG.4C

421
423
422
$I_{CAMk+1}$

# FIG.4D

431
433
432
$I_{CAMk+2}$

**FIG.5A**

413

I_BGk

**FIG.5B**

423

I_BGk+1

**FIG.5C**

433

I_BGk+2

START

S601

OBTAIN DATA OF CAPTURED
IMAGE AND CAMERA PARAMETERS

S602

OBTAIN DATA OF BACKGROUND IMAGE

S603

OBTAIN DATA OF OBJECT SHAPE

S604

SET LEARNING REGION

S605

GENERATION PROCESSING OF
OUTSIDE-LEARNING-REGION IMAGE

S606

ESTIMATE RADIANCE FIELDS

S607

OUTPUT DATA RELATING TO
RADIANCE FIELDS

END

# FIG.6

700

**Input**

701 — Images : XXXXX

702 — Cam Params : XXXXX

703 — Background Images : XXXXX

Next > — 704

# FIG.7A

710

**ROI**

711 — ☑ Region 1
☐ Region 2

712

Region 2

Region 1

Next > — 713

# FIG.7B

**FIG.8**

FIG.9A

FIG.9B

START OF S605

SELECT CAPTURED IMAGE ~S1001

SELECT PIXEL POSITION ~S1002

DOES RAY INTERSECT BOTH OBJECT INSIDE LEARNING REGION AND OBJECT OUTSIDE LEARNING REGION ? ~S1003 — NO

YES ~S1004

DETERMINE PIXEL VALUE OF OUTSIDE-LEARNING-REGION IMAGE BASED ON OBJECT SHAPE AND CAPTURED IMAGE

DOES RAY INTERSECT OBJECT OUTSIDE LEARNING REGION? ~S1005 — NO

YES ~S1006

DETERMINE PIXEL VALUE OF OUTSIDE-LEARNING-REGION IMAGE TO BE PIXEL VALUE OF CAPTURED IMAGE

DETERMINE PIXEL VALUE OF OUTSIDE-LEARNING-REGION IMAGE TO BE PIXEL VALUE OF BACKGROUND IMAGE ~S1007

HAVE ALL PIXEL POSITIONS BEEN SELECTED? ~S1008 — NO

YES

HAVE ALL CAPTURED IMAGES BEEN SELECTED? ~S1009 — NO

YES

END OF S605

FIG.10

25

## FIG.11A

1101

1102

$I_{OSk}$

## FIG.11B

1103

$I_{OSk+1}$

## FIG.11C

1104

$I_{OSk+2}$

# FIG.12A

$I_{VRk}$

# FIG.12D

$I_{VRk}$

# FIG.12B

$I_{VRk+1}$

# FIG.12E

$I_{VRk+1}$

# FIG.12C

$I_{VRk+2}$

# FIG.12F

$I_{VRk+2}$

START OF S605

— S1001
SELECT CAPTURED IMAGE

— S1002
SELECT PIXEL POSITION

— S1003
DOES RAY INTERSECT BOTH OBJECT INSIDE LEARNING REGION AND OBJECT OUTSIDE LEARNING REGION ?
— NO

YES

— S1304
IS REPRESENTATION OF OBJECT INSIDE LEANING REGION INCLUDED ?
— NO

YES — S1004
DETERMINE PIXEL VALUE OF OUTSIDE-LEARNING-REGION IMAGE BASED ON OBJECT SHAPE AND CAPTURED IMAGE

— S1306
DETERMINE PIXEL VALUE OF OUTSIDE-LEARNING-REGION IMAGE TO BE VALUE INDICATING THAT REPRESENTATION OF OBJECT IS NOT INCLUDED

**FIG.13**

— S1008
HAVE ALL PIXEL POSITIONS BEEN SELECTED?
— NO

YES — S1009
HAVE ALL CAPTURED IMAGES BEEN SELECTED?
— NO

YES

END OF S605

— S1005
DOES RAY INTERSECT OBJECT OUTSIDE LEARNING REGION?
— NO

YES — S1006
DETERMINE PIXEL VALUE OF OUTSIDE-LEARNING-REGION IMAGE TO BE PIXEL VALUE OF CAPTURED IMAGE

— S1007
DETERMINE PIXEL VALUE OF OUTSIDE-LEARNING-REGION IMAGE TO BE PIXEL VALUE OF BACKGROUND IMAGE

**FIG.14**

**FIG.15**

**FIG.16A**

411
413
412
1611
$I_{CAMk}$

**FIG.16B**

413
$I_{BGk}$

**FIG.16C**

1621
$I_{OSk}$

**FIG.16D**

$I_{VRk}$

Europäisches
Patentamt

European
Patent Office

Office européen
des brevets

# EUROPEAN SEARCH REPORT

**Application Number**

EP 25 15 4655

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LEE JAE-HYEOK ET AL: "ICE-NeRF: Interactive Color Editing of NeRFs via Decomposition-Aware Weight Optimization", 2023 IEEE/CVF INTERNATIONAL CONFERENCE ON COMPUTER VISION (ICCV), 1 October 2023 (2023-10-01), pages 3468-3478, XP093282769, DOI: 10.1109/ICCV51070.2023.00323 ISBN: 979-8-3503-0718-4 * the whole document * | 1-12 | INV. G06T15/08 G06T17/00 |
| A | MILDENHALL BEN ET AL: "NeRF: Representing Scenes as Neural Radiance Fields for View Synthesis", 19 March 2020 (2020-03-19), SPRINGER, PAGE(S) 405 - 421, XP047569510, * the whole document * | 1-12 | |

TECHNICAL FIELDS
SEARCHED      (IPC)

G06T

The present search report has been drawn up for all claims

| Place of search | Date of completion of the search | Examiner |
|---|---|---|
| The Hague | 2 June 2025 | Wahba, Alexander |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 11308659 B